# EUROPEAN PATENT SPECIFICATION

(11) **EP 0 816 369 B1**
(45) Date of publication and mention of the grant of the patent: **26.02.2003**
(21) Application number: 96110080.7
(22) Date of filing: 21.06.1996
(51) Int. Cl.: C07F 9/38

(54) **Method for producing N-phosphonomethylglycine**
Verfahren zur Herstellung von N-Phosphonomethylglyzin
Procédé de production de la N-phosphonométhyl glycine

(43) Date of publication of application: 07.01.1998
(73) Proprietor: SHOWA DENKO KABUSHIKI KAISHA, Minato-ku, Tokyo (JP)
(72) Inventor: Miyata, Hideo, Chem. Res. Lab., Kawasaki-shi, Kanagawa, 210 (JP); Sasaki, Toru, Higashinagahara-kojo, Showa Denko KK, Kawanuma-gun, Fukushima, 969-34 (JP); Morikawa, Kohei, Chem. Res. Lab., Kawasaki-shi, Kanagawa, 210 (JP)
(74) Representative: Strehl Schübel-Hopf & Partner

(56) References cited:
- EP-A- 0 717 046
- US-A- 3 923 877
- US-A- 4 221 583
- CHEMICAL ABSTRACTS, vol. 118, no. 5, 1 February 1993 Columbus, Ohio, US; abstract no. 039415, MORIKAWA K ET AL: "Preparation of N-(phosphonomethyl)glycine as herbicide" XP002018988 & JP-A-04 279 595 (SHOWA DENKO KK) 5 October 1992
- CHEMICAL ABSTRACTS, vol. 124, no. 23, 3 June 1996 Columbus, Ohio, US; abstract no. 317885, SASAKI T ET AL: "Preparation of N-(phosphonomethyl)glycine" XP002018989 & JP-A-08 027 173 (SHOWA DENKO KK) 30 January 1996
- CHEMICAL ABSTRACTS, vol. 125, Columbus, Ohio, US; abstract no. 222444, MYATA H ET AL: "Preparation of N-(phosphonomethyl)glycine from (aminomethyl)phosphonic acid and glycolonitrile" XP002018990 & JP-A-08 176 166 (SHOWA DENKO KK) 9 July 1996

## Description

### FIELD OF THE INVENTION

The present invention relates to a method for producing N-phosphonomethylglycine which is useful as a herbicide.

### DESCRIPTION OF RELATED ART

The agricultural chemical N-phosphonomethylglycine and salts thereof are biodegradable and are effective as herbicides when used in a small quantities. Accordingly, the subject chemical is widely used in agriculture.

A large number of methods for producing N-phosphonomethyl-glycine are known.

Examples of the method for producing N-phosphonomethylglycine using an aminomethylphosphonic acid as a starting material include adding an aminomethylphosphonic acid in an aqueous glyoxal solution at a temperature of from 40 to 45 iC, and then heating the mixed solution (Japanese Unexamined Patent Publication No. 62-61992); reacting an aminomethylphosphonic acid and glyoxal as raw materials in the presence of sulfur dioxide (European Patent 81459 and U.S. Patent 4,369,142); reacting an aminomethylphosphonic acid with glyoxalic acid, and then reducing the reaction product with hydrogen in the presence of a palladium catalyst (European Patent 186648); heating an aminomethylphosphonic acid and chloroacetic acid at a temperature of approximately from 80 to 120 iC in the presence of an acid acceptor such as sodium hydroxide (Polish Patent 120759 and Spanish Patent 504479); and reacting an aminomethylphosphonic acid with diethyl bromomalonate under an alkaline condition, and then hydrolyzing the reaction product with sulfuric acid (Spanish Patent 545456).

The above-described methods employ a gas that is difficult to handle, involve a cumbersome reaction operation, or suffer from insufficient reaction yields. Thus, these methods are not entirely satisfactory for industrial production.

U.S. Patent 4,221,583 discloses a method for producing N-phosphonomethylglycinonitrile or a mono salt thereof comprising reacting an aminomethylphosphonic acid with formaldehyde in the presence of an alkali (where the alkali is necessary for forming a mono salt of the aminomethylphosphonic acid), to thereby convert the aminomethylphosphonic acid into the N-methylol form, and reacting potassium cyanide therewith at a pH of from 7 to 10. This patent publication discloses that N-phosphonomethylglycine is obtained by hydrolyzing the N-phosphonomethylglycinonitrile synthesized by the above-described method. However, in the Example of this patent publication, the yield of N-phosphonomethylglycinonitrile at best is 66 %. In order to increase the conversion ratio of the aminomethylphosphonic acid, a large excess of potassium cyanide in an amount of 2.4 equivalents to the aminomethylphosphonic acid is required. Furthermore, yield in hydrolysis of N-phosphonomethylglycinonitrile according to the Example is at best 90 %. Accordingly, the yield of N-phosphonomethylglycine based on the aminomethylphosphonic acid starting material is about 60 %.

In view of the above, the present inventors previously proposed a method for producing N-phosphonomethylglycine using an aminomethylphosphonic acid as a raw material, which method is easy to practice and provides excellent yield. This method comprises reacting an aminomethylphosphonic acid with glycolonitrile in the presence of an alkali metal hydroxide, and then adding thereto an alkali metal hydroxide in an amount sufficient to neutralize the carboxylic acid that is produced to thereby effect hydrolysis (Japanese Unexamined Patent Publication No. 4-279595).

According to this method, the conversion ratio of each of the aminomethylphosphonic acid and the glycolonitrile is 95 or more, and the selectivity of N-phosphonomethylglycine is 95 % or more.

This method follows a conventional technique. Namely, when the nitrile group of a nitrile derivative having an acidic hydroxyl group derived from a phosphoric acid, such as N-phosphonomethylglycinonitrile, is hydrolyzed into a carboxylic acid, the reaction is conducted by protecting the acidic hydroxyl group as a stable alkali metal salt. The alkali hydrolysis used in this method requires a neutralization step comprising adding an acid after the hydrolysis to thereby obtain free N-phosphonomethyl-glycine.

U.S. Patent 4,221,583 cited above discloses that free N-phosphonomethylglycinonitrile can be converted into N-phosphonomethylglycine by hydrolyzing with an acid or an alkali. In the Example thereof, N-phosphonomethylglycine is obtained by boiling N-phosphonomethylglycinonitrile (0.9 g) with an excess amount (50 ml) of hydrochloric acid and water (100 ml).

US-A-3 923 877 discloses a method for producing N-phosphonomethylglycine, which comprises a first step of reacting 1,3,5-tricyanomethyl-hexahydro-1,3,5-triazine with a phosphorous acid ester and a second step in which the obtained diester of N-phosphonomethylglycinonitrile is subjected to hydrolysis in the presence of an acid.

EP-A-717 046 discloses a process for producing N-phosphonomethylglycinonitrile by reacting aminomethyl phosponic acid and glycolonitrile to produce N-phosponomethylglycinonitrile. In order to obtain free N-phosphonomethylglycine two further process steps are required, i. e. a first step of alkali hydrolysis of the nitrile group and a second step in which the alkali salt is converted into the free compound.

Chemical Abstracts, Vol. 124, No. 23, 4.6.1996, describes a process for preparing N-phosphonomethyl-glycine by hydrolysis of N-acylaminomethyl-phosphonic acid with alkali metal hydroxides or alkaline earth metal hydroxides, followed by treatment of the resulting salt of aminomethyl-phosphonic acid with glycolonitrile.

An object of the present invention is to provide a method for producing N-phosphonomethylglycine which dispenses with the need for a neutralization step that is otherwise required when reacting an aminomethylphosphonic acid with glycolonitrile under alkaline condition and hydrolyzing the reaction product under an alkaline condition.

As a result of extensively investigations on a method for producing N-phosphonomethylglycine comprising reacting an aminomethylphosphonic acid with glycolonitrile under an alkaline condition and then hydrolyzing the reaction product, the present inventors found that N-phosphonomethylglycine can be obtained in high yield when N-phosphonomethylglycinonitrile or a salt thereof (obtained by reacting an aminomethylphosphonic acid with glycolonitrile under an alkaline condition) is hydrolyzed under an acidic condition by adding thereto an appropriate amount of an acid. The present invention is based on this finding.

According to the method of the present invention, an acidic solution of N-phosphonomethylglycine is concentrated and the pH is adjusted, as needed, to crystallize and isolate N-phosphonomethyl-glycine. As a result, an alkali neutralization step is omitted that is otherwise required in a method which relies on alkali hydrolysis.

### SUMMARY OF THE INVENTION

The present invention provides:
(1) A method for producing N-phosphonomethylglycine comprising reacting an aminomethylphosphonic acid with glycolonitrile under an alkaline condition to obtain a product comprising an N-phosphonomethylglycinonitrile salt or a mixture of an N-phosphonomethylglycinonitrile salt and N-phosphonomethylglycinonitrile, and adding an acid to hydrolyze the product under an acidic condition;
(2) A method for producing N-phosphonomethylglycine as described in (1) above, comprising adding the acid for hydrolysis in an amount needed to neutralize the reaction solution obtained by reacting an aminomethylphosphonic acid with glycolonitrile under an alkaline condition, and further adding the acid in an amount of 0.5 equivalents or more to the N-phosphonomethylglycinonitrile; and
(3) A method for producing N-phosphonomethylglycine as described in (1) or (2) above, comprising reacting an aminomethylphosphonic acid and glycolonitrile in an amount of from 0.5 to 1.5 equivalents to the aminomethylphosphonic acid in the presence of an alkali metal hydroxide or the alkaline earth metal hydroxide, wherein the alkali metal hydroxide or the alkaline earth metal hydroxide is added in an amount of from 1.5 to 2.5 equivalents to the aminomethylphosphonic acid.
   Other preferred embodiments of the present invention are as follows:
(4) A method for producing N-phosphonomethylglycine as described in (1) or (2) above, comprising adding hydrochloric acid or sulfuric acid to hydrolyze the product; and
(5) A method for producing N-phosphonomethylglycine as described in (3) above, wherein the alkali metal hydroxide comprises sodium hydroxide or potassium hydroxide.

### DETAILED DESCRIPTION OF THE INVENTION

The present invention is described in detail below.

### [N-Phosphonomethylglycinonitrile]

N-phosphonomethylglycinonitrile or a salt thereof for use as a raw material in the hydrolysis reaction of the present invention can be produced by a conventional method.

A preferred example is a method where the reaction of an aminomethylphosphonic acid with glycolonitrile is conducted by adding an alkali metal hydroxide or an alkaline earth metal hydroxide (hereinafter referred to as an alkaline metal hydroxide) as described in Japanese Unexamined Patent Publication No. 3-64026. In this method, an alkaline metal hydroxide is used because the aminomethylphosphonic acid is an amphoteric compound having an amino group and a phosphono group within the same molecule, and the amino group of the aminomethylphosphonic acid must not be in the form of an ion for reacting the aminomethylphosphonic acid with glycolonitrile. When at least one of two acidic hydroxyl groups of the aminomethylphosphonic acid is not neutralized with the alkaline metal hydroxide, as found in general amphoteric compounds, a part or almost all of the amino group of the aminomethylphosphonic acid is in the form of an ion, namely an amphoteric ion, and the aminomethylphosphonic acid does not react with glycolonitrile.

Accordingly, the alkaline metal hydroxide is preferably added in an amount of 2 equivalents to the aminomethylphosphonic acid. The molar ratio of the alkaline metal hydroxide to the aminomethylphosphonic acid is not so strict. However, if the alkaline metal hydroxide is added in an excess amount and a large amount of substantially free alkaline metal hydroxide is present, the yield is reduced due to decomposition of glycolonitrile. On the other hand, if the alkaline metal hydroxide is present in a small amount, due to the above-described reason, the reactivity of the aminomethylphosphonic acid is lowered and the yield is also reduced. Accordingly, the alkaline metal hydroxide is preferably added in an amount of from 1.5 to 2.5 equivalents, more preferably from 1.8 to 2.2 equivalents to the aminomethylphosphonic acid.

Useful alkaline metal hydroxides include sodium hydroxide, potassium hydroxide, calcium hydroxide and magnesium hydroxide. Sodium hydroxide and potassium hydroxide are preferred.

The amount of glycolonitrile that is used in the reaction, as long as it is within the above-described quantitative range relative to the alkaline metal hydroxide and the aminomethylphosphonic acid, is preferably one equivalent to the theoretical amount of aminomethylphosphonic acid. This value is also not so strict. However, if the amount of glycolonitrile is large relative to the aminomethylphosphonic acid, the excess glycolonitrile causes a side reaction. On the other hand, if the amount of glycolonitrile is small, the aminomethylphosphonic acid which is relatively expensive remains unreacted. Therefore, large deviations from the equivalent amount are not preferred.

Accordingly, the glycolonitrile is preferably used in an amount of from 0.5 to 1.5 equivalents, more preferably from 0.8 to 1.2 equivalents to the aminomethylphosphonic acid.

The reaction system is not particularly limited. However, to an aqueous solution obtained by mixing and stirring an aminomethylphosphonic acid and an alkaline metal hydroxide, an aqueous glycolonitrile solution is usually added dropwise, and stirring is further continued to complete the reaction.

The reaction temperature of the aminomethylphosphonic acid with glycolonitrile is preferably 60 °C or lower. If the temperature is too high, a side reaction results to thereby reduce the yield.

The time required for the reaction varies depending upon the reaction temperature, but it is approximately from 30 minutes to 3 hours.

According to this reaction, N-phosphonomethylglycinonitrile is obtained as a solution of an alkaline metal salt or a partial alkaline metal salt of N-phosphonomethylglycinonitrile depending upon the amount of the alkaline metal hydroxide that is used. The solution thus obtained can be used as is in the subsequent acidic hydrolysis reaction step. Or, if desired, the solution may be concentrated to isolate an alkaline metal salt of N-phosphonomethylglycinonitrile. Furthermore, the alkaline reaction solution may be neutralized with an acid according to a usual method to isolate N-phosphonomethylglycinonitrile, and the product may be purified by a recrystallization method or the like.

### [Hydrolysis of N-phosphonomethylglycinonitrile]

In the present invention, subsequent to the above-described reaction of an aminomethylphosphonic acid with glycolonitrile under an alkaline condition, the alkaline reaction solution is neutralized and hydrolyzed under an acidic condition.

The acid for use in this reaction includes acids that are commonly used in an acidic hydrolysis reaction, such as hydrochloric acid, sulfuric acid, hydrobromic acid, perchloric acid and a strongly acidic ion exchange resin. Among these, hydrochloric acid and sulfuric acid are preferred, and hydrochloric acid is more preferred.

The acid is added in an amount needed to neutralize the reaction solution obtained by reacting an aminomethylphosphonic acid with glycolonitrile under an alkaline condition (namely, an amount needed for neutralizing the alkaline salt of N-phosphonomethylglycinonitrile and the amino group), and further adding the acid in an amount corresponding to at least 0.5 equivalents. The acid is preferably added in an amount needed neutralize the reaction solution plus an amount of from 2 to 6 equivalents of the N-phosphonomethylglycinonitrile. If the amount of the acid is less than the amount needed to neutralize the reaction solution plus 0.5 equivalents, the reaction proceeds at a slow rate, and it is unsuitable for practice in industry. On the other hand, if the amount of the acid is excessive, the resulting N-phosphonomethylglycine is difficult to isolate and purify, which condition is economically disadvantageous.

The reaction temperature during hydrolysis is set in the vicinity of the reflux temperature. If the temperature is low, the reaction rate is slow and this is not practical.

The reaction time varies depending upon the temperature, however, it is approximately from 3 to 15 hours.

After the hydrolysis reaction, the reaction solution may be concentrated to precipitate and isolate N-phosphonomethylglycine. Alternatively, after adjusting the pH by adding an alkali to the reaction solution and appropriately diluting the reaction solution, N-phosphonomethylglycine may be isolated and purified using other methods known in the art such as purifying with an ion exchange resin, individually or in combination thereof. However, the present invention provides a superior result when the desired N-phosphonomethylglycine is deposited by concentrating the acidic reaction solution. The crude product may further be purified by recrystallization.

### EFFECT OF THE INVENTION

According to the present invention, subsequent to a reaction step where N-phosphonomethylglycinonitrile is produced by reacting an aminomethylphosphonic acid with glycolonitrile under an alkaline condition to convert the same into an N-phosphonomethylglycinonitrile salt or a mixture of an N-phosphonomethylglycinonitrile salt and N-phosphonomethylglycinonitrile, the reaction product is hydrolyzed by adding thereto an acid in a prescribed amount. Accordingly, the use of a large amount of an alkaline metal hydroxide and the neutralization step for obtaining N-phosphonomethylglycine after hydrolysis, which steps are necessary in a conventional alkali hydrolysis method, are omitted in the present invention. Thus, the present invention provides a very useful industrial process for producing N-phosphonomethylglycine.

### DESCRIPTION OF PREFERRED EMBODIMENTS

The production process of N-phosphonomethylglycine according to the present invention is described in greater detail below by reference to the following representative Examples. These Examples are set forth to facilitate an understanding of the present invention. However, the present invention should not be construed as being limited thereto.

### Example 1

To a 300 ml-volume four-necked flask equipped with a stirrer, a thermometer, a dropping funnel and a reflux condenser were added 50 g of water, 16.7 g (200 mmol) of a 48 % aqueous sodium hydroxide solution and 11.1 g (100 mmol) of an aminomethylphosphonic acid and the mixture was stirred. The flask was cooled in ice water, and while keeping the reaction solution at a temperature of 5 °C or lower, 14.3 g (100 mmol) of a 50 % glycolonitrile solution was added dropwise over a period of 30 minutes. After completing the dropwise addition, the mixture was stirred at a temperature of 5 °C or lower for 30 minutes. After returning the mixture to room temperature, it was further stirred for 1 hour. Then, 50.7 g (500 mmol) of a 36 % aqueous hydrochloric acid solution was added, and the mixture was heat-refluxed for 8 hours with stirring. After completing the reaction, the reaction solution was analyzed by HPLC and was found to contain 89 mmol of N-phosphonomethylglycine. Thus, the reaction yield to N-phosphonomethylglycinonitrile as a raw material was 89 %.

The reaction solution was concentrated to about one half of its volume, and was allowed to stand all night to crystallize N-phosphonomethylglycine. The N-phosphonomethylglycine was separated by filtration, washed with water and dried to obtain 11.2 g of a purified product. The purity of this product as determined by HPLC was 96 %.

### Example 2

The reaction was conducted in the same manner as in Example 1, except for changing the addition amount of the 36 % aqueous hydrochloric acid solution from 50.7 g to 71 g (700 mmol) and the heat-refluxing time to 5 hours. After completing the reaction, the solution was analyzed by HPLC and was found to contain 91 mmol of N-phosphonomethylglycine (91 % to N-phosphonomethylglycinonitrile as a raw material).

## Claims

1. A method for producing N-phosphonomethylglycine comprising reacting an aminomethylphosphonic acid with glycolonitrile under an alkaline condition to obtain a product comprising an N-phosphonomethylglycinonitrile salt or a mixture of an N-phosphonomethylglycinonitrile salt and N-phosphonomethylglycinonitrile, and adding an acid to hydrolyze the product under an acidic condition.

2. A method for producing N-phosphonomethylglycine as claimed in claim 1, comprising adding the acid for hydrolysis in an amount needed to neutralize the reaction solution obtained by reacting an aminomethylphosphonic acid with glycolonitrile under an alkaline condition, and further adding the acid in an amount of 0.5 equivalents or more to the N-phosphonomethylglycinonitrile.

3. A method for producing N-phosphonomethylglycine as claimed in claim 1 or 2, comprising reacting an aminomethylphosphonic acid and glycolonitrile in an amount of from 0.5 to 1.5 equivalents to the aminomethylphosphonic acid in the presence of an alkali metal hydroxide or an alkaline earth metal hydroxide, wherein said alkali metal hydroxide or said alkaline earth metal hydroxide is added in an amount of from 1.5 to 2.5 equivalents to the aminomethylphosphonic acid.

## Patentansprüche

1. Verfahren zur Herstellung von N-Phosphonomethylglycin, welches das Umsetzen einer Aminomethylphosphonsäure mit Glycolnitril unter alkalischen Bedingungen unter Bildung eines Produkts, das ein N-Phosphonomethylglycinnitrilsalz oder ein Gemisch aus einem N-Phosphonomethylglycinnitrilsalz und einem N-Phosphonomethylglycinnitril enthält, und das Zugeben einer Säure umfasst, wobei das Produkt unter sauren Bedingungen hydrolysiert wird.

2. Verfahren zur Herstellung von N-Phosphonomethylglycin nach Anspruch 1, welches das Zugeben der Säure zur Hydrolyse in einer Menge, die zur Neutralisation der durch Reaktion einer Aminomethylphosphonsäure mit Glycolnitril unter alkalischen Bedingungen erhaltenen Reaktionslösung notwendig ist, und das weitere Zugeben der Säure in einer Menge von 0,5 Äquivalenten oder mehr, bezogen auf das N-Phosphonomethylglycinnitril, umfasst.

3. Verfahren zur Herstellung von N-Phosphonomethylglycin nach Anspruch 1 oder 2, welches das Umsetzen einer Aminomethylphosphonsäure und 0,5 bis 1,5 Äquivalente Glycinnitril, bezogen auf die Aminomethylphosphonsäure, in Anwesenheit eines Alkalimetallhydroxids oder eines Erdalkalimetallhydroxids umfasst, wobei das Alkalimetallhydroxid oder das Erdalkalimetallhydroxid in einer Menge zwischen 1,5 und 2,5 Äquivalenten, bezogen auf die Aminomethylphosphonsäure, zugegeben wird.

## Revendications

1. Procédé pour produire de la N-phosphonométhylglycine consistant à faire réagir un acide aminométhylphosphonique avec du glycolonitrile dans des conditions alcalines pour obtenir un produit comprenant un sel de N-phosphonométhylglycinonitrile ou un mélange de N-phosphonométhylglycinonitrile et de sel de N-phosphonométhylglycinonitrile et à ajouter un acide pour hydrolyser le produit dans des conditions acides.

2. Procédé pour produire de la N-phosphonométhylglycine selon la revendication 1, comprenant d'ajouter l'acide pour hydrolyse en quantité nécessaire pour neutraliser la solution de réaction obtenue en faisant réagir un acide aminométhylphosphonique avec du glycolonitrile dans des conditions alcalines et d'ajouter en plus l'acide en quantité égale à 0,5 équivalent ou plus par rapport au N-phosphonométhylglycinonitrile.

3. Procédé pour produire de la N-phosphonométhylglycine selon la revendication 1 ou 2, comprenant de faire réagir un acide aminométhylphosphonique et du glycolonitrile en quantité comprise entre 0,5 et 1,5 équivalents par rapport à l'acide aminométhylphosphonique en présence d'un hydroxyde de métal alcalin ou d'un hydroxyde de métal alcalino-terreux, dans lequel on ajoute ledit hydroxyde de métal alcalin ou ledit hydroxyde de métal alcalino-terreux en quantité comprise entre 1,5 et 2,5 équivalents par rapport à l'acide aminométhylphosphonique.
